# FASCICULE DE BREVET EUROPEEN

(11) **EP 3 873 786 B1**
(45) Date de publication et mention de la délivrance du brevet: **13.08.2025**
(21) Numéro de dépôt: 19800946.6
(22) Date de dépôt: 29.10.2019
(51) Int. Cl.: B60W 50/02, B60W 50/023

(54) **PROCÉDÉ D'ÉLABORATION D'UNE CONSIGNE DE PILOTAGE D'UN VÉHICULE AUTOMOBILE**
VERFAHREN ZUR ERZEUGUNG VON STEUERUNGSEINSTELLUNGEN FÜR EIN KRAFTFAHRZEUG
METHOD FOR GENERATING CONTROL SETTINGS FOR A MOTOR VEHICLE

(30) Priorité: 02.11.2018 FR 1860137
(43) Date de publication de la demande: 08.09.2021
(73) Titulaire: Ampere SAS, 92100 Boulogne-Billancourt (FR); NISSAN MOTOR CO., LTD., Yokohama-shi, Kanagawa 221-0023 (JP)
(72) Inventeur: MATTHES, Katrin, 06410 Biot (FR)
(74) Mandataire: Renault Group
(86) Numéro de dépôt international: PCT/EP2019/079531
(87) Numéro de publication internationale: WO 2020/089230

(56) Documents cités:
- DE-A1- 102009 019 792
- DE-A1- 102009 019 792
- DE-A1- 102017 127 972
- DE-A1- 102017 127 972
- JP-A- 2015 230 552
- JP-A- 2015 230 552
- US-A1- 2014 343 750
- US-A1- 2014 343 750

## Description

La présente invention concerne de manière générale les aides à la conduite de véhicules automobiles.

Elle concerne plus particulièrement un procédé d'élaboration d'une consigne de pilotage d'un ou plusieurs organe(s) de conduite d'un véhicule automobile, tel(s) que le système de direction, le système de freinage, ou le groupe motopropulseur.

Elle concerne aussi un véhicule automobile comprenant une unité de calcul et une pluralité de capteurs adaptés à acquérir des données brutes relatives à l'environnement du véhicule automobile.

L'invention s'applique plus particulièrement aux véhicules dotés d'un mode de conduite autonome. Elle pourrait ainsi s'appliquer aux domaines automobile, aéronautique et aérospatial.

### ARRIERE-PLAN TECHNOLOGIQUE

Pour faciliter et rendre plus sûre la conduite d'un véhicule automobile, il est connu d'équiper ce dernier de systèmes d'aide à la conduite. Il peut s'agir de systèmes permettant une conduite autonome du véhicule (sans intervention humaine), ou de systèmes permettant une conduite partiellement autonome du véhicule (typiquement de systèmes adaptés à prendre momentanément le contrôle du véhicule par exemple pour opérer un freinage d'urgence ou pour replacer le véhicule au centre de sa voie de circulation).

Pour permettre à ces systèmes d'appréhender l'environnement autour du véhicule, on place sur ce dernier de nombreux capteurs tels que des caméras, des capteurs RADAR, LIDAR, SONAR...

Chaque capteur présente ses qualités et ses défauts. Afin de réduire au mieux les erreurs de détection de l'environnement, il est alors connu de pratiquer de la « fusion de données », c'est-à-dire de prendre en compte les données émises par différents capteurs pour en déduire une seule et même donnée d'environnement. Ainsi est-il possible de tirer parti des qualités de chaque capteur.

Malheureusement, même ainsi, il arrive encore que le véhicule commette des erreurs, c'est-à-dire qu'il se méprenne sur une situation. A titre d'exemple, il peut considérer à tort un objet dangereux comme un obstacle anodin et donc ne pas commander un freinage d'urgence.

On cherche alors à réduire ces erreurs, comme dans le document JP2015230552, qui décrit une solution dont la fiabilité peut être améliorée.

### OBJET DE L'INVENTION

La présente invention propose un nouveau procédé et un nouveau système répondant à un niveau de sécurité fonctionnelle ASIL D (acronyme pour « Automotive Safety Integrity Level D ») tel que défini par la norme ISO26262.

Plus particulièrement, on propose selon l'invention un procédé de pilotage d'un véhicule automobile selon la revendication 1, comprenant des étapes de :
- réception, par une unité de calcul du véhicule, de données brutes qui sont acquises par des capteurs du véhicule et qui sont relatives à l'environnement du véhicule,
- traitement par l'unité de calcul desdites données brutes afin d'en déduire des informations relatives à l'environnement du véhicule automobile et des coefficients de probabilité relatives à la probabilité qu'une erreur ait été commise dans la déduction de chaque information,
- élaboration d'une consigne de pilotage du véhicule automobile en fonction desdites informations et desdits coefficients de probabilité,
- détermination, pour au moins un premier desdits capteurs, d'un coefficient de qualité relatif à la qualité des données brutes que ce premier capteur acquiert,
- estimation de la fiabilité de la consigne de pilotage en fonction des coefficients de qualité et des coefficients de probabilité, et
- décision de correction ou de non-correction de la consigne de pilotage en fonction de la fiabilité estimée de la consigne de pilotage.

A l'étape de traitement, les données brutes émises par chaque capteur sont traitées séparément des données brutes émises par les autres capteurs afin de détecter des objets dans l'environnement du véhicule automobile et de classifier lesdits objets, chaque coefficient de probabilité étant associé à un objet classifié et audit capteur, les données traitées étant fusionnées en tenant compte de chaque coefficient de probabilité et de chaque coefficient de qualité.

Ainsi, grâce à l'invention, il est possible de considérer les conditions de fonctionnement des capteurs (en déterminant les coefficients de qualité de ces capteurs) afin de décider si la consigne de pilotage du véhicule automobile est utilisable en l'état, en toute sécurité.

A titre d'exemple, il est possible de déterminer si la luminosité est suffisamment bonne pour considérer que les données acquises par la caméra sont de qualité. Il est également possible de déterminer si le véhicule traverse des embruns ou non, afin de savoir si les données acquises par le capteur LIDAR sont ou non de qualité.

D'autres caractéristiques avantageuses et non limitatives du procédé de pilotage conforme à l'invention sont les suivantes :
- à l'étape de détermination, le coefficient de qualité d'au moins un premier des capteurs est déterminé en fonction des données brutes acquises par au moins un autre desdits capteurs et/ou en fonction de données tierces qui sont acquises par un détecteur tiers et qui sont relatives aux conditions de mesure des données brutes acquises par le premier capteur ;
- le détecteur tiers est un capteur de luminosité ou un capteur de pluie ou un capteur adapté à détecter l'état de la chaussée sur laquelle roule le véhicule automobile ;
- l'un au moins desdits capteurs est un capteur d'images ou un capteur RADAR ou un capteur LIDAR ;
- à l'étape d'estimation, la fiabilité de la consigne de pilotage est estimée en fonction également du résultat de la fusion des données traitées ; et
- la décision de correction ou de non-correction de la consigne de pilotage est prise en fonction également d'informations de redondance issues de capteurs distincts desdits capteurs.

L'invention concerne aussi un véhicule automobile comprenant une pluralité de capteurs adaptés à acquérir des données brutes relatives à l'environnement du véhicule automobile et une unité de calcul adaptée à mettre en œuvre un procédé de pilotage tel que précité.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

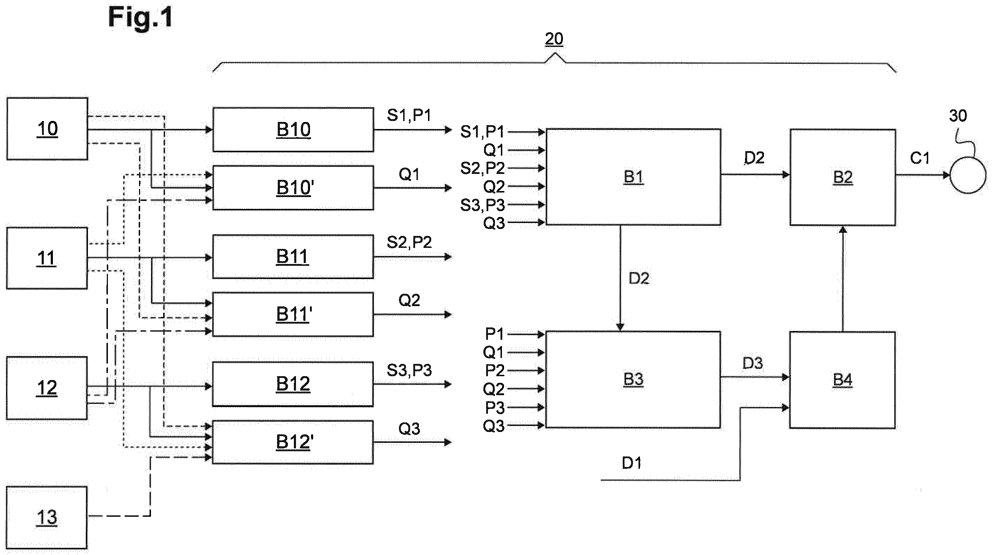

Sur le dessin annexé, la figure 1 est un schéma illustrant un système de pilotage adapté à mettre en œuvre un procédé conforme à l'invention.

L'invention s'applique plus particulièrement à un véhicule automobile équipé d'un système de pilotage permettant une conduite autonome du véhicule, c'est-à-dire sans intervention humaine.

Elle porte plus précisément sur un procédé de pilotage d'au moins un organe de conduite du véhicule automobile.

Cet organe de conduite pourra par exemple être formé par le groupe motopropulseur du véhicule automobile, ou par le dispositif de direction ou par le dispositif de freinage. Dans la suite de cet exposé, on considérera que l'ensemble de ces organes de conduite sont pilotés par une unité de calcul du véhicule.

Cette unité de calcul 20, représentée sur une partie de la figure 1, comporte un processeur, une mémoire et différentes interfaces d'entrée et de sortie.

Elle est adaptée à mettre en œuvre des algorithmes distincts mais interdépendants, ici représentés sous la formes de blocs.

Grâce à sa mémoire, l'unité de calcul 20 mémorise une application informatique, constituée de programmes d'ordinateur comprenant des instructions dont l'exécution par le processeur permet la mise en œuvre du procédé qui sera décrit ci-après.

Grâce à ses interfaces de sortie, l'unité de calcul 20 est connectée aux organes de conduite 30 de telle manière qu'elle peut leur transmettre une consigne de pilotage C1.

Grâce à ses interfaces d'entrée, l'unité de calcul 20 est connectée à plusieurs capteurs 10, 11, 12, 13 (au moins deux capteurs, mais de préférence davantage).

Il peut s'agir de tout type de capteur.

A titre d'exemple, le véhicule automobile pourra être équipé d'une caméra 10 numérique, d'un capteur RADAR 11, d'un capteur LIDAR 12, et d'un capteur de luminosité 13 orientés pour couvrir toutes les orientations (soit 360 degrés) autour du véhicule.

Le capteur de luminosité 13 est présent pour permettre d'assurer une fonction classique d'allumage automatique des feux du véhicule.

Les autres capteurs 10, 11, 12, ci-après appelés capteurs d'environnement, sont quant à eux présents pour assurer la fonction de pilotage autonome du véhicule.

Chacun de ces capteurs d'environnement 10, 11, 12 présente des qualités et des défauts. A titre d'exemple, une caméra permettra une bonne détection d'obstacle par temps clair, mais une moins bonne détection par luminosité réduite ou trop forte. A l'inverse, un capteur RADAR ou LIDAR permettra une bonne détection d'obstacle quelle que soit la luminosité, mais il fournira des données peu précises en présence d'embruns ou de mauvaise météo (pluie, brouillard, neige).

La consigne de pilotage C1 transmise aux organes de conduite sera ici élaborée en fonction principalement des données brutes émises par les capteurs d'environnement 10, 11, 12.

On peut alors décrire en détail la façon selon laquelle cette consigne de pilotage C1 sera élaborée, en référence à la figure 1.

En pratique, l'unité de calcul 20 est programmée pour mettre en œuvre le procédé décrit ci-après de manière récursive, c'est-à-dire en boucle, à pas de temps réguliers.

Ce procédé comporte sept étapes principales.

Au cours d'une première étape, l'unité de calcul 20 lit les données brutes qui ont été acquises par tous les capteurs 10, 11, 12, 13.

Dans l'exemple ici considéré, l'unité de calcul 20 lit les données brutes émises par la caméra 10, par le capteur RADAR 11, par le capteur LIDAR 12 et par le capteur de luminosité 13.

A titre d'exemple, dans le cas de la caméra 10, les données brutes sont formées par les caractéristiques de couleur et de luminosité de chaque pixel du capteur photosensible de la caméra. Dans le cas du capteur de luminosité 13, les données brutes sont formées par les niveaux de luminosité mesurés au cours du temps.

Au cours d'une seconde étape, les données brutes acquises sont traitées afin d'en déduire des informations relatives à l'environnement du véhicule automobile.

Les données brutes émises par les capteurs d'environnement 10, 11, 12 sont traitées séparément les unes des autres.

L'objectif est de détecter, sur la base de ces données brutes, des objets situés dans l'environnement du véhicule automobile, de classifier ces objets (obstacle, panneau de signalisation, véhicule tiers, piéton...), et d'affecter à chaque objet classifié S1, S2, S3 un coefficient de probabilité P1, P2, P3 relatif à la probabilité qu'une erreur ait été commise dans la détection et dans la classification de cet objet.

Pour mettre en œuvre cette étape, on peut utiliser des méthodes de classification basées sur des techniques d'apprentissage machine (plus connues sous le nom anglais de « machine learning »), tels que par exemple des techniques dites CNN (de l'anglais « Convolutional Neural Network »).

En variante ou en complément, on peut utiliser des filtres ou tout autre type de traitement adéquat.

En résumé, comme le montre la figure 1, l'unité de calcul 20 comporte trois blocs B10, B11, B12 qui reçoivent respectivement en entrée les données brutes issues de la caméra 10, du capteur RADAR 11 et du capteur LIDAR 12, et qui fournissent séparément en sortie une description S1, S2, S3 de chaque objet ayant été détecté et classifié, associée à un coefficient de probabilité P1, P2, P3.

Au cours d'une troisième étape, l'unité de calcul 20 détermine un coefficient de qualité Q1, Q2, Q3 pour chacun des capteurs d'environnement 10, 11, 12. Ce coefficient de qualité Q1, Q2, Q3 est relatif à la qualité des données brutes acquises par le capteur considéré.

En pratique, ce coefficient de qualité Q1, Q2, Q3 permet de savoir dans quelle mesure les conditions extérieures sont propres à permettre un bon fonctionnement du capteur considéré.

En d'autres termes, ces coefficients de qualité Q1, Q2, Q3 permettent de déterminer :
- si la caméra 10 est en mesure de bien détecter des objets, compte tenu par exemple de la luminosité ambiante, et
- si les capteurs RADAR 11 et LIDAR 12 sont en mesure de bien détecter des objets, compte tenu par exemple de la météo.

Chaque coefficient de qualité Q1, Q2, Q3 est déterminé en fonction des données brutes acquises par le capteur considéré (comme cela est représenté par les flèches en traits ininterrompus) mais aussi en fonction des données brutes acquises par d'autres capteurs (comme cela est représenté par les flèches en pointillés).

Ainsi la météo peut-elle être déterminée en fonction des images acquises par la caméra 10 et la luminosité ambiante peut-elle être acquise par le capteur de luminosité 13.

Bien entendu, d'autres capteurs pourraient être employés, notamment pour déterminer la météo. Ainsi, on pourrait employer un capteur de pluie et/ou des accéléromètres qui seraient situés dans les roues du véhicule et qui seraient adaptés à détecter l'état de la chaussée sur laquelle roule le véhicule automobile.

Les données brutes issues des capteurs 10, 11, 12, 13 sont utilisées pour déterminer chaque coefficient de qualité Q1, Q2, Q3 en appliquant ici des méthodes :
- statistiques (dans le cas des données brutes issues de la camera 10, on peut notamment utiliser des méthodes « BRIQUE » ou « NIQUE »), et/ou
- fréquentielles (dans le cas des données brutes issues de la camera 10, on peut aussi utiliser des méthodes « Sharpness/Blur » ou « High-Low Frequency Index » pour déterminer la netteté des images ; dans le cas des données brutes issues du capteur LIDAR, on peut utiliser des méthodes « RMSE avec référence », de type « HDMAP et GPS » ou « matrice de covariance/mesure d'entropie »).

En résumé, comme le montre la figure 1, l'unité de calcul 20 comporte trois blocs B10', B11', B12' qui reçoivent en entrée les données brutes issues de la caméra 10 et/ou du capteur RADAR 11 et/ou du capteur LIDAR 12 et/ou du capteur de luminosité 13, et qui fournissent chacun en sortie un coefficient de qualité Q1, Q2, Q3 qui est associé à l'un des capteurs d'environnement 10, 11, 12 et qui est relatif au niveau de précision des mesures effectuées par ce capteur compte tenu des conditions de roulage.

Comme cela apparaîtra dans la suite, l'estimation d'un coefficient de qualité pour chaque capteur d'environnement 10, 11, 12 permettra alors de privilégier le ou les capteurs pour lesquels les conditions de fonctionnement sont estimées les meilleures et qui fournissent donc les données brutes les plus fiables.

Au cours d'une quatrième étape, il est prévu de fusionner les données issues des différents capteurs d'environnement 10, 11, 12.

On pourrait pour cela fusionner, d'une part, les données brutes acquises par les capteurs, et, d'autre part, les données issues des blocs B10, B11, B12.

On considérera toutefois ici que seules seront fusionnées les données issues des blocs B10, B11, B12 (à savoir les descriptions S1, S2, S3).

Ces données sont fusionnées en tenant compte de chaque coefficient de probabilité P1, P2, P3, et en fonction de chaque coefficient de qualité Q1, Q2, Q3.

Par « fusion de données », on entend une méthode mathématique qui est appliquée à plusieurs données issues de capteurs hétérogènes et qui permet d'affiner la détection et la classification des objets présents autour du véhicule automobile.

A titre d'exemple, on peut fusionner les données issues des images acquises par la caméra 10 avec les données issues des capteurs RADAR 11 et LIDAR 12 afin de mieux estimer la position exacte et la dynamique (vitesse et accélération) des objets repérés sur les images acquises par la caméra 10.

Les coefficients de probabilité P1, P2, P3 et de qualité Q1, Q2, Q3 servent alors à ajuster dynamiquement les poids de chaque capteur d'environnement 10, 11, 12 pour la détection et la classification des objets.

En résumé, comme le montre la figure 1, l'unité de calcul 20 comporte un bloc B1 qui reçoit en entrée les descriptions S1, S2, S3 des objets détectés ainsi que les coefficients de probabilité P1, P2, P3 et de qualité Q1, Q2, Q3, et qui fournit en sortie un résultat D2 qui comprend les descriptions (catégorie, position et dynamique) de chaque objet ayant été détecté par plusieurs capteurs d'environnement et ayant été contrôlé par les algorithmes de fusion de données.

Grâce à ce résultat D2, au cours d'une cinquième étape, l'unité de calcul 20 élabore une consigne de pilotage C1 pour les différents organes de conduite 30 du véhicule automobile.

Pour cela, comme le montre la figure 1, l'unité de calcul 20 comporte un bloc B2 qui reçoit en entrée le résultat D2 issu du bloc B1 et qui fournit en sortie la consigne de pilotage C1.

Cette consigne de pilotage C1 est donc élaborée en tenant compte de l'appréciation par l'unité de calcul 20 de l'environnement du véhicule.

Pour éviter que toute erreur dans cette appréciation ait des conséquences dangereuses pour les occupants du véhicule, il est en outre prévu deux étapes supplémentaires de sécurisation du procédé.

Au cours d'une sixième étape, l'unité de calcul 20 estime la fiabilité de la consigne de pilotage C1 en fonction des coefficients de qualité Q1, Q2, Q3 et de probabilité P1, P2, P3.

En pratique, la fiabilité de la consigne de pilotage C1 est estimée au moyen d'un coefficient de fiabilité D3.

L'algorithme de calcul de ce coefficient de fiabilité D3 pourra par exemple se baser sur une méthode de corrélation des coefficients de qualité Q1, Q2, Q3 et des coefficients de probabilité P1, P2, P3.

Préférentiellement, le coefficient de fiabilité D3 sera déterminé en fonction principalement des coefficients de qualité Q1, Q2, Q3.

En effet, si ces coefficients de qualité Q1, Q2, Q3 indiquent qu'une majorité des capteurs d'environnement 10, 11, 12 fonctionne dans des conditions ne permettant pas une bonne appréhension par le véhicule de son environnement, c'est cette information qui va majoritairement être prise en compte pour déterminer le coefficient de fiabilité D3 (quelles que soient les valeurs des coefficients de probabilité).

Autrement formulé, les coefficients de probabilité P1, P2, P3 ont un poids statistique plus faible que les coefficients de qualité Q1, Q2, Q3.

Par ailleurs, plus le nombre de capteurs utilisés pour déterminer le coefficient de qualité d'un capteur donné sera élevé, plus grand sera le poids de ce coefficient de qualité dans le calcul du coefficient de fiabilité D3.

L'algorithme de calcul du coefficient de fiabilité D3 pourra prendre en compte d'autres données. Ainsi, de façon préférentielle, le coefficient de fiabilité D3 sera estimé en fonction également du résultat D2 de la fusion. De cette façon, si le résultat D2 de la fusion est incohérent, cette incohérence pourra être prise en compte pour calculer le coefficient de fiabilité D3.

En résumé, comme le montre la figure 1, l'unité de calcul 20 comporte un bloc B3 qui reçoit en entrée les coefficients de probabilité P1, P2, P3 et de qualité Q1, Q2, Q3 ainsi que le résultat D2 de la fusion, et qui fournit en sortie le coefficient de fiabilité D3.

Au cours d'une septième étape, l'unité de calcul 20 va alors prendre la décision de corriger ou non la consigne de pilotage C1 (avant l'envoie de cette dernière aux organes de conduite 30).

Cette décision est prise en tenant compte principalement du coefficient de fiabilité D3.

Préférentiellement, cette décision pourra être prise en fonction également d'informations de redondance D1 issues de capteurs distincts des capteurs 10, 11, 12 considérés jusqu'alors.

En pratique, si le coefficient de fiabilité D3 est inférieur à un seuil et/ou si les informations de redondance D1 indiquent une incohérence entre les données considérées, l'unité de calcul 20 est prévue pour requérir une correction de la consigne de pilotage C1.

L'action qui découle de cette correction peut être par exemple le désengagement du mode de conduite autonome du véhicule ou l'arrêt de la prise en compte des données brutes issues d'un ou de plusieurs capteurs préalablement identifiés.

En résumé, comme le montre la figure 1, l'unité de calcul 20 comporte un bloc B4 qui reçoit en entrée le coefficient de fiabilité D3 ainsi que les informations de redondance D1, et qui fournit éventuellement en sortie une consigne de correction de la consigne de pilotage C1.

Ce bloc B4 est formé par un algorithme dont l'objectif est d'assurer un niveau de sécurité ASIL-D au sens de la norme ISO26262.

## Revendications

1. Procédé de pilotage d'un véhicule automobile comprenant une unité de calcul (20) et une pluralité de capteurs (10, 11, 12) adaptés à acquérir des données brutes relatives à l'environnement du véhicule automobile, ledit procédé comprenant des étapes de :
- réception par l'unité de calcul (20) des données brutes acquises par les capteurs (10, 11, 12),
- traitement par l'unité de calcul (20) desdites données brutes afin d'en déduire des informations (S1, S2, S3) relatives à l'environnement du véhicule automobile et des coefficients de probabilité (P1, P2, P3) relatives à la probabilité qu'une erreur ait été commise dans la déduction de chaque information (S1, S2, S3), et
- élaboration d'une consigne de pilotage (C1) du véhicule automobile en fonction desdites informations (S1, S2, S3) et desdits coefficients de probabilité (P1, P2, P3),
- détermination, pour au moins un premier desdits capteurs (10, 11, 12), d'un coefficient de qualité (Q1, Q2, Q3) relatif à la qualité des données brutes que ce premier capteur (10, 11, 12) acquiert,
- estimation de la fiabilité de la consigne de pilotage (C1) en fonction des coefficients de qualité (Q1, Q2, Q3) et des coefficients de probabilité (P1, P2, P3), et
- décision de correction ou de non-correction de la consigne de pilotage (C1) en fonction de la fiabilité estimée de la consigne de pilotage (C1),
**caractérisé en ce que**, à l'étape de traitement, les données brutes émises par chaque capteur (10, 11, 12) sont traitées séparément des données brutes émises par les autres capteurs (10, 11, 12) afin de détecter des objets dans l'environnement du véhicule automobile et de classifier lesdits objets, chaque coefficient de probabilité (P1, P2, P3) étant associé à un objet classifié et audit capteur (10, 11, 12), les données traitées étant fusionnées en tenant compte de chaque coefficient de probabilité (P1, P2, P3) et de chaque coefficient de qualité (Q1, Q2, Q3).

2. Procédé de pilotage selon la revendication précédente, dans lequel à l'étape de détermination, le coefficient de qualité (Q1, Q2, Q3) d'au moins un premier des capteurs (10, 11, 12) est déterminé en fonction des données brutes acquises par au moins un autre desdits capteurs (10, 11, 12) et/ou en fonction de données tierces qui sont acquises par un détecteur tiers (13) et qui sont relatives aux conditions de mesure des données brutes acquises par le premier capteur (10, 11, 12).

3. Procédé de pilotage selon la revendication précédente, dans lequel le détecteur tiers (13) est un capteur de luminosité ou un capteur de pluie ou un capteur adapté à détecter l'état de la chaussée sur laquelle roule le véhicule automobile.

4. Procédé de pilotage selon l'une des revendications précédentes, dans lequel l'un au moins desdits capteurs (10, 11, 12) est un capteur d'images ou un capteur RADAR ou un capteur LIDAR.

5. Procédé de pilotage selon la revendication 1, dans lequel à l'étape d'estimation, la fiabilité de la consigne de pilotage (C1) est estimée en fonction également du résultat de la fusion des données traitées.

6. Procédé de pilotage selon l'une des revendications précédentes, dans lequel la décision de correction ou de non-correction de la consigne de pilotage (C1) est prise en fonction également d'informations de redondance issues de capteurs distincts desdits capteurs (10, 11, 12).

7. Véhicule automobile comprenant une pluralité de capteurs (10, 11, 12) adaptés à acquérir des données brutes relatives à l'environnement du véhicule automobile et une unité de calcul (20), **caractérisé en ce que** l'unité de calcul (20) est adaptée à mettre en œuvre un procédé de pilotage conforme à l'une des revendications précédentes.

## Patentansprüche

1. Verfahren zur Steuerung eines Kraftfahrzeugs, umfassend eine Recheneinheit (20) und eine Mehrzahl von Sensoren (10, 11, 12), die dazu angepasst sind, Rohdaten bezüglich des Umfelds des Kraftfahrzeugs zu erfassen, wobei das Verfahren die folgenden Schritte umfasst:
- Empfangen der von den Sensoren (10, 11, 12) erfassten Rohdaten durch die Recheneinheit (20),
- Verarbeiten der Rohdaten durch die Recheneinheit (20), um daraus Informationen (S1, S2, S3) bezüglich des Umfelds des Kraftfahrzeugs abzuleiten und Wahrscheinlichkeitskoeffizienten (P1, P2, P3) bezüglich der Wahrscheinlichkeit, dass beim Ableiten jeder Information (S1, S2, S3) ein Fehler begangen worden ist, und
- Erarbeiten eines Steuerungssollwerts (C1) für das Kraftfahrzeug in Abhängigkeit von den Informationen (S1, S2, S3) und von den Wahrscheinlichkeitskoeffizienten (P1, P2, P3),
- Bestimmen, für mindestens einen ersten der Sensoren (10, 11, 12), eines Qualitätskoeffizienten (Q1, Q2, Q3) bezüglich der Qualität der Rohdaten, die dieser erste Sensor (10, 11, 12) erfasst,
- Schätzen der Zuverlässigkeit des Steuerungssollwerts (C1) in Abhängigkeit von den Qualitätskoeffizienten (Q1, Q2, Q3) und von den Wahrscheinlichkeitskoeffizienten (P1, P2, P3), und
- Entscheidung über das Korrigieren oder Nichtkorrigieren des Steuerungssollwerts (C1) in Abhängigkeit von der geschätzten Zuverlässigkeit des Steuerungssollwerts (C1),
**dadurch gekennzeichnet, dass** beim Schritt des Verarbeitens die von jedem Sensor (10, 11, 12) gesendeten Rohdaten getrennt von den von den anderen Sensoren (10, 11, 12) gesendeten Rohdaten verarbeitet werden, um Objekte im Umfeld des Kraftfahrzeugs zu detektieren und die Objekte zu klassifizieren, wobei jeder Wahrscheinlichkeitskoeffizient (P1, P2, P3) einem klassifizierten Objekt und dem Sensor (10, 11, 12) zugeordnet ist, wobei die verarbeiteten Daten unter Berücksichtigung jedes Wahrscheinlichkeitskoeffizienten (P1, P2, P3) und jedes Qualitätskoeffizienten (Q1, Q2, Q3) zusammengeführt werden.

2. Verfahren zur Steuerung nach dem vorhergehenden Anspruch, wobei beim Schritt des Bestimmens der Qualitätskoeffizient (Q1, Q2, Q3) mindestens eines ersten der Sensoren (10, 11, 12) in Abhängigkeit von den von mindestens einem anderen der Sensoren (10, 11, 12) erfassten Rohdaten und/oder in Abhängigkeit von Drittdaten, die von einem dritten Detektor (13) erfasst werden und die sich auf die Messbedingungen der von dem ersten Sensor (10, 11, 12) erfassten Rohdaten beziehen, bestimmt wird.

3. Verfahren zur Steuerung nach dem vorhergehenden Anspruch, wobei der dritte Detektor (13) ein Helligkeitssensor oder ein Regensensor ist oder ein Sensor, der dazu angepasst ist, den Zustand der Fahrbahn, auf der das Kraftfahrzeug fährt, zu detektieren.

4. Verfahren zur Steuerung nach einem der vorhergehenden Ansprüche, wobei mindestens einer der Sensoren (10, 11, 12) ein Bildsensor oder ein RADAR-Sensor oder ein LIDAR-Sensor ist.

5. Verfahren zur Steuerung nach Anspruch 1, wobei beim Schritt des Schätzens die Zuverlässigkeit des Steuerungssollwerts (C1) auch in Abhängigkeit von dem Ergebnis der Zusammenführung der verarbeiteten Daten geschätzt wird.

6. Verfahren zur Steuerung nach einem der vorhergehenden Ansprüche, wobei die Entscheidung über das Korrigieren oder Nichtkorrigieren des Steuerungssollwerts (C1) auch in Abhängigkeit von Redundanzinformationen, die aus von den Sensoren (10, 11, 12) verschiedenen Sensoren stammen, getroffen wird.

7. Kraftfahrzeug, das eine Mehrzahl von Sensoren (10, 11, 12), die dazu angepasst sind, Rohdaten bezüglich des Umfelds des Kraftfahrzeugs zu erfassen, und eine Recheneinheit (20) umfasst, **dadurch gekennzeichnet, dass** die Recheneinheit (20) dazu angepasst ist, ein Verfahren zur Steuerung nach einem der vorhergehenden Ansprüche durchzuführen.

## Claims

1. Method for controlling a motor vehicle comprising a computing unit (20) and a plurality of sensors (10, 11, 12) suitable for acquiring raw data relating to the environment of the motor vehicle, said method comprising steps of:
- the computing unit (20) receiving the raw data acquired by the sensors (10, 11, 12),
- the computing unit (20) processing said raw data in order to derive therefrom information (S1, S2, S3) relating to the environment of the motor vehicle and probability coefficients (P1, P2, P3) relating to the probability that an error has been made in the deriving of each item of information (S1, S2, S3), and
- developing a control instruction (C1) for the motor vehicle according to said information (S1, S2, S3) and said probability coefficients (P1, P2, P3),
- determining, for at least a first of said sensors (10, 11, 12), a quality coefficient (Q1, Q2, Q3) relating to the quality of the raw data that this first sensor (10, 11, 12) acquires,
- estimating the reliability of the control instruction (C1) according to the quality coefficients (Q1, Q2, Q3) and the probability coefficients (P1, P2, P3), and
- deciding to correct or not to correct the control instruction (C1) according to the estimated reliability of the control instruction (C1),
**characterized in that**, in the processing step, the raw data transmitted by each sensor (10, 11, 12) are processed separately from the raw data transmitted by the other sensors (10, 11, 12) in order to detect objects in the environment of the motor vehicle and to classify said objects, each probability coefficient (P1, P2, P3) being associated with a classified object and with said sensor (10, 11, 12), the processed data being fused taking into account each probability coefficient (P1, P2, P3) and each quality coefficient (Q1, Q2, Q3).

2. Control method according to the preceding claim, wherein in the determining step, the quality coefficient (Q1, Q2, Q3) of at least a first of the sensors (10, 11, 12) is determined according to the raw data acquired by at least one other of said sensors (10, 11, 12) and/or according to third-party data which are acquired by a third-party detector (13) and which relate to the conditions of measurement of the raw data acquired by the first sensor (10, 11, 12).

3. Control method according to the preceding claim, wherein the third-party detector (13) is a light sensor or a rain sensor or a sensor suitable for detecting the state of the roadway on which the motor vehicle is driving.

4. Control method according to one of the preceding claims, wherein at least one of said sensors (10, 11, 12) is an image sensor or a RADAR sensor or a LIDAR sensor.

5. Control method according to Claim 1, wherein in the estimating step, the reliability of the control instruction (C1) is estimated also according to the result of the fusion of the processed data.

6. Control method according to one of the preceding claims, wherein the decision to correct or not to correct the control instruction (C1) is taken also according to redundancy information from sensors distinct from said sensors (10, 11, 12).

7. Motor vehicle comprising a plurality of sensors (10, 11, 12) suitable for acquiring raw data relating to the environment of the motor vehicle and a computing unit (20), **characterized in that** the computing unit (20) is suitable for implementing a control method according to one of the preceding claims.
